# EUROPEAN PATENT SPECIFICATION

(11) **EP 2 704 152 B1**
(45) Date of publication and mention of the grant of the patent: **27.12.2017**
(21) Application number: 13161505.6
(22) Date of filing: 28.03.2013
(51) Int. Cl.: B23K 31/02, B23P 6/00, F16L 5/02, G21C 13/02, G21C 13/036, G21C 17/017, G21C 19/20, B23K 101/00, B23K 101/12, B23K 103/02

(54) **Nozzle repairing method**
Düsenreparaturverfahren
Procédé de réparation de buse

(30) Priority: 30.08.2012 JP 2012190394
(43) Date of publication of application: 05.03.2014
(73) Proprietor: MITSUBISHI HEAVY INDUSTRIES, LTD., Tokyo 108-8215 (JP)
(72) Inventor: Yamamoto, Takeshi, Tokyo 108-8215 (JP); Hamamoto, Tomochika, Tokyo 108-8215 (JP); Hori, Nobuyuki, Tokyo 108-8215 (JP); Nishimura, Tsuyoshi, Tokyo 108-8215 (JP); Sakashita, Hideshi, Tokyo 108-8215 (JP)
(74) Representative: Intès, Didier Gérard André

(56) References cited:
- JP-A- H02 102 493
- US-A- 5 918 911
- US-A1- 2011 194 663
- US-A1- 2012 175 352

## Description

### TECHNICAL FIELD

The present invention relates to a nozzle repairing method of repairing a nozzle provided in a nuclear reactor vessel.

### BACKGROUND ART

For example, a nuclear power plant with a pressurized water reactor (PWR) uses light water as nuclear reactor coolant and neutron moderator, keeps the light water as high-temperature and high-pressure water that is not boiled in the entire reactor core, sends the high-temperature and high-pressure water to a steam generator so as to generate steam by a heat exchange therebetween, and sends the steam to a turbine generator so as to generate electric power.

In such a nuclear power plant, there is a need to periodically inspect various structures in order to ensure enough safety or reliability in the pressurized water reactor. Then, when any problem is found by the respective inspections, the portion causing the problem is repaired. For example, the nuclear reactor vessel body of the pressurized water reactor is provided with a plurality of instrumentation nozzles penetrating a lower mirror. Here, in each instrumentation nozzle, an in-core instrument guide tube is fixed to the upper end inside the reactor and a conduit tube is connected to the lower end outside the reactor. Then, a neutron flux detector capable of measuring a neutron flux is insertable from the instrumentation nozzle by the conduit tube to the reactor core (fuel assembly) through the in-core instrument guide tube.

The instrumentation nozzle is formed in a manner such that the in-core instrument tube formed of nickel base alloy is fitted into the attachment hole of the nuclear reactor vessel body formed of low-alloy steel and is welded by a material formed of nickel base alloy. For this reason, there is a possibility that stress corrosion cracking may be generated in the in-core instrument tube due to the long-time usage, and there is a need to repair the instrumentation nozzle in the event of stress corrosion cracking. As the nozzle repairing method of the related art, for example, a method is disclosed in Japanese Patent Application Laid-open No. 2011-075453 (document D1). In the nozzle portion repairing method disclosed in the document D1, a buttered groove is formed by digging an inner surface of a vessel in a substantially cylindrical shape into an area with a J-groove; a plug, which has a plug body having an inner end surface forming an extension portion of the outer surface of the buttered groove and a protrusion portion protruding from the inner end surface and having substantially the same axis as that of the buttered groove, is inserted into a nozzle hole so that the inner end surface substantially matches the outer surface of the buttered groove, a buttered welding portion is formed in the buttered groove by buttered welding, a J-groove is formed in the buttered welding portion, and the nozzle is inserted and welded.

In the nozzle repairing method of the related art, the inner surface of the vessel is provided with the buttered groove, the plug is inserted into the nozzle hole, the buttered welding is performed so as to form the J-groove, and the nozzle is inserted thereinto and welded. For this reason, the nozzle to be newly attached may be attached with high precision, but the repairing becomes complicated and the repairing cost increases.

US 2012/175352 discloses a prior art nozzle welding method. JP H02-102493 discloses a method to prevent the generation of leakage. US 2011/194663 discloses a nozzle mounting structure to facilitate mounting of a nozzle.

### DISCLOSURE OF INVENTION

According to the present invention, there is provided a nozzle repairing method of repairing an instrumentation nozzle according to claim 1, in which an in-core instrument tube is inserted into an attachment hole formed in a semi-spherical portion of a nuclear reactor vessel and an inner surface side of the semi-spherical portion is groove-welded so as to fix the in-core instrument tube. The nozzle repairing method includes: removing a connection portion with respect to the in-core instrument tube in a groove-welding portion; removing the in-core instrument tube from the semi-spherical portion; removing the groove-welding portion and processing a plug attachment portion; and fixing a plug to the plug attachment portion by welding.

There is also disclosed a nuclear reactor vessel including: a nuclear reactor vessel body of which a lower portion is formed in a semi-spherical shape; a nuclear reactor vessel cover which is formed in a semi-spherical shape and is attached to an upper portion of the nuclear reactor vessel body; an inlet nozzle and an outlet nozzle which are installed at the side portion of the nuclear reactor vessel body; a reactor core which is disposed inside the nuclear reactor vessel body and includes a plurality of fuel assemblies; a plurality of control rods which are insertable into the fuel assembly; a control rod driving mechanism for moving the control rods upward or downward; a plurality of instrumentation nozzles which are installed in the lower portion of the nuclear reactor vessel body and into which a neutron flux detector is insertable; and a plug for plugging any nozzle attachment hole in the plurality of instrumentation nozzles.

### BRIEF DESCRIPTION OF DRAWINGS

FIG. 1 is a cross-sectional view illustrating an instrumentation nozzle of a nuclear reactor vessel which is repaired by a nozzle repairing method according to a first embodiment of the invention;
FIG. 2 is a schematic configuration diagram of a nuclear power plant;
FIG. 3 is a longitudinal sectional view illustrating a pressurized water reactor;
FIG. 4 is a flowchart illustrating the nozzle repairing method of the first embodiment;
FIG. 5 is a schematic diagram illustrating a thimble tube drawing operation;
FIG. 6 is a schematic diagram illustrating an operation of removing a reactor core internal structure from a nuclear reactor vessel;
FIG. 7 is a schematic diagram illustrating a water stopping operation for an in-core instrument tube;
FIG. 8 is a schematic diagram illustrating a conduit tube cutting operation;
FIG. 9 is a schematic diagram illustrating a water stopping cap attaching operation;
FIG. 10 is a schematic diagram illustrating an in-core instrument tube cutting operation;
FIG. 11A is a schematic diagram illustrating an in-core instrument tube trepanning operation;
FIG. 11B is a cross-sectional view illustrating a trepanned in-core instrument tube;
FIG. 12 is a cross-sectional view illustrating an in-core instrument tube drawing operation;
FIG. 13 is a schematic diagram illustrating a groove-welding portion cutting operation in the instrumentation nozzle;
FIG. 14 is a schematic diagram illustrating a plug attachment portion cutting operation in the instrumentation nozzle;
FIG. 15 is a schematic diagram illustrating an operation of attaching a plug to the instrumentation nozzle;
FIG. 16 is a schematic diagram illustrating an operation of welding a plug to the instrumentation nozzle;
FIG. 17 is a schematic diagram illustrating the instrumentation nozzle to which a plug is welded;
FIG. 18 is a schematic diagram illustrating a water stopping cap separating operation;
FIG. 19 is a flowchart illustrating a nozzle repairing method according to a second embodiment of the invention;
FIG. 20 is a schematic diagram illustrating an operation of removing an upper reactor core internal structure from a nuclear reactor vessel;
FIG. 21 is a schematic diagram illustrating a thimble tube cutting operation;
FIG. 22 is a schematic diagram illustrating an operation of suspending a lower reactor core internal structure from the nuclear reactor vessel;
FIG. 23 is a schematic diagram illustrating an operation of installing a thimble stand to the nuclear reactor vessel; and
FIG. 24 is a schematic diagram illustrating a thimble tube supporting operation.

### BEST MODE(S) FOR CARRYING OUT THE INVENTION

Hereinafter, referring to the accompanying drawings, a nozzle repairing method and a nuclear reactor vessel will be described in detail. Furthermore, the invention is not limited to the embodiments, and when there are a plurality of embodiments, the respective embodiments may be combined with each other.

Embodiments of the invention aim to solve the problems of the related art, and it is an object of the embodiments to provide a nozzle repairing method capable of improving the workability and decreasing the repairing cost by easily performing a repairing operation.

### [First embodiment]

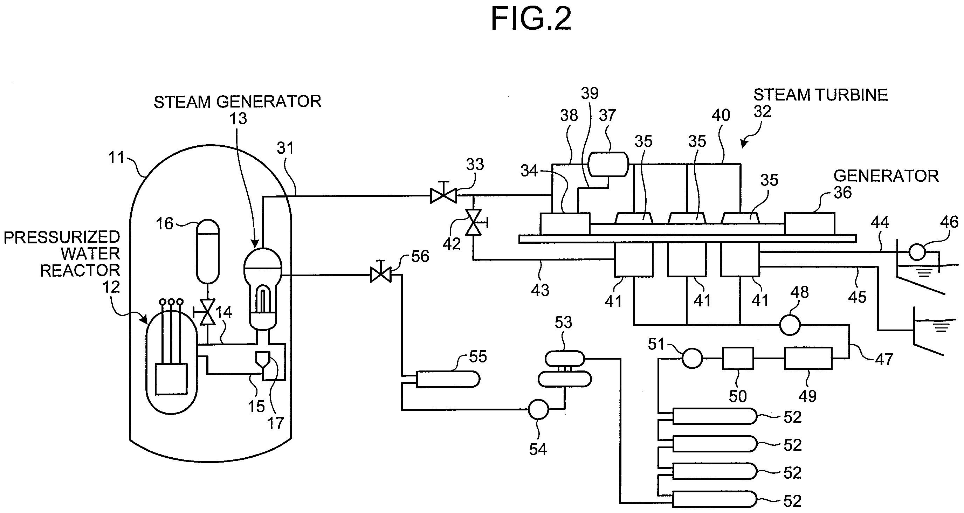

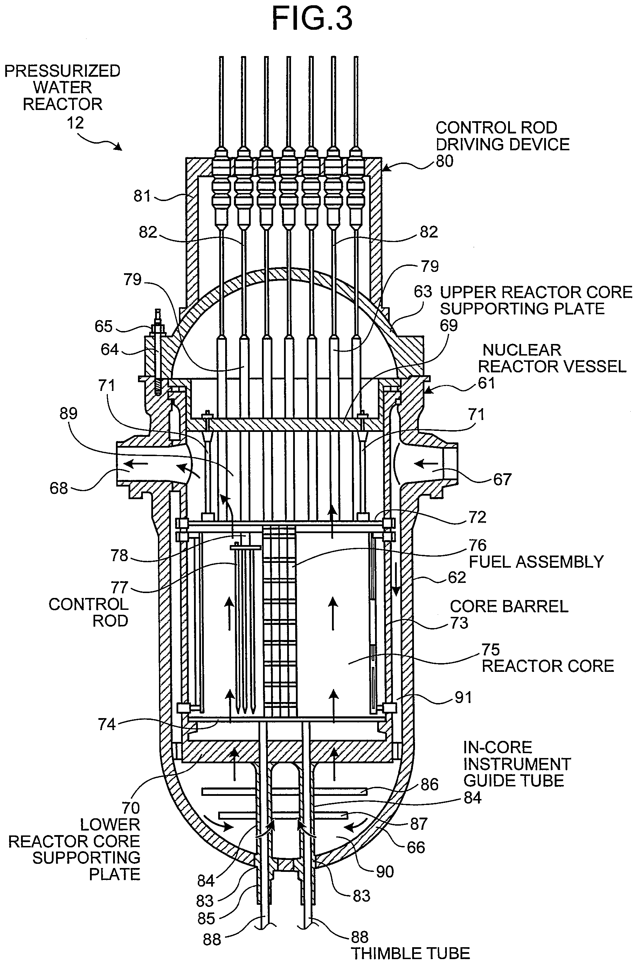

FIG. 2 is a schematic configuration diagram of a nuclear power plant, and FIG. 3 is a longitudinal sectional view illustrating a pressurized water reactor.

A nuclear reactor is a pressurized water reactor (PWR) which uses light water as a nuclear reactor coolant and a neutron moderator, adjusts the water to be high-temperature and high-pressure water throughout the entire reactor core so that the light water is not boiled, sends the high-temperature and high-pressure water to a steam generator so as to generate steam by the heat exchange therebetween, and sends the steam to a turbine generator so as to generate electric power.

In the nuclear power plant with the pressurized water reactor, as illustrated in FIG. 2, a containment 11 accommodates a pressurized water reactor 12 and a steam generator 13, where the pressurized water reactor 12 and the steam generator 13 are connected to each other through a high temperature side feeding tube 14 and a low temperature side feeding tube 15, the high temperature side feeding tube 14 is provided with a pressurizer 16, and the low temperature side feeding tube 15 is provided with a primary cooling water pump 17. In this case, light water is used as moderator and primary cooling water (coolant), and in order to suppress the primary cooling water from being boiled at the reactor core portion, a primary cooling system is controlled by the pressurizer 16 so as to be maintained in a high-pressure state which is of about 150 to 160 times the atmospheric pressure.

Accordingly, in the pressurized water reactor 12, light water as primary cooling water is heated by low-enriched uranium or MOX as fuel (nuclear fuel), and the high-temperature primary cooling water is sent to the steam generator 13 through the high temperature side feeding tube 14 while the primary cooling water is maintained at a predetermined high pressure by the pressurizer 16. In the steam generator 13, the primary cooling water which is cooled by the heat exchange between the high-temperature and high-pressure primary cooling water and the secondary cooling water is returned to the pressurized water reactor 12 through the low temperature side feeding tube 15.

The steam generator 13 is connected to a steam turbine 32 through a tube 31 which feeds the heated secondary cooling water, that is, the steam, and the tube 31 is provided with a main steam isolating valve 33. The steam turbine 32 includes a high-pressure turbine 34 and a low-pressure turbine 35, and is connected with a generator (power generating device) 36. Further, a moisture separation heater 37 is provided between the high-pressure turbine 34 and the low-pressure turbine 35, a cooling water branch tube 38 which is branched from the tube 31 is connected to the moisture separation heater 37, the high-pressure turbine 34 and the moisture separation heater 37 are connected to each other by a low-temperature reheat tube 39, and the moisture separation heater 37 and the low-pressure turbine 35 are connected to each other by a high-temperature reheat tube 40.

Further, the low-pressure turbine 35 of the steam turbine 32 includes a condenser 41, and the condenser 41 is connected with a turbine bypass tube 43 which extends from the tube 31 and includes a bypass valve 42 and is connected with a water intake tube 44 and a drainage tube 45 which are used for the supply and the drainage of the cooling water (for example, the sea water). The water intake tube 44 includes a circulating water pump 46, and the other end thereof is disposed under the sea along with the drainage tube 45.

Then, the condenser 41 is connected with a tube 47, and is connected with a condensate pump 48, a ground condenser 49, a condensate demineralizating device 50, a condensate booster pump 51, and a low-pressure water supply heater 52. Further, the tube 47 is connected with a deaerator 53, and is provided with a main water supply pump 54, a high-pressure water supply heater 55, and a main water supply control valve 56.

Accordingly, in the steam generator 13, the steam which is generated by the heat exchange with the high-temperature and high-pressure primary cooling water is sent to the steam turbine 32 (from the high-pressure turbine 34 to the low-pressure turbine 35) through the tube 31 and the steam turbine 32 is driven by the steam so as to generate electric power by the generator 36. At this time, the steam which is generated from the steam generator 13 is used to drive the high-pressure turbine 34. Then, the moisture content contained in the steam is removed by the moisture separation heater 37 and the steam is heated so as to drive the low-pressure turbine 35. Then, the steam which is used to drive the steam turbine 32 is cooled by using the sea water in the condenser 41 so as to become condensate, and is returned to the steam generator 13 through the ground condenser 49, the condensate demineralizating device 50, the low-pressure water supply heater 52, the deaerator 53, the high-pressure water supply heater 55, and the like.

In the pressurized water reactor 12 of the nuclear power plant with such a configuration, as illustrated in FIG. 3, a nuclear reactor vessel 61 includes a nuclear reactor vessel body 62 and a nuclear reactor vessel cover (upper mirror) 63 which is attached to the upper portion thereof so that a reactor core internal structure may be inserted into the nuclear reactor vessel, where the nuclear reactor vessel cover 63 is fixed to the nuclear reactor vessel body 62 so as to be opened or closed through a plurality of stud bolts 64 and a plurality of nuts 65.

The nuclear reactor vessel body 62 is formed in a cylindrical shape of which the upper portion may be opened by separating the nuclear reactor vessel cover 63 and the lower portion is blocked by a lower mirror 66 that is formed in a semi-spherical shape. Then, the upper portion of the nuclear reactor vessel body 62 is provided with an inlet nozzle 67 which supplies light water (coolant) as primary cooling water and an outlet nozzle 68 which discharges light water. Further, the nuclear reactor vessel body 62 is provided with a main water nozzle (not illustrated) separately from the inlet nozzle 67 and the outlet nozzle 68.

Inside the nuclear reactor vessel body 62, an upper reactor core supporting plate 69 is fixed to a position above the inlet nozzle 67 and the outlet nozzle 68, and a lower reactor core supporting plate 70 is fixed so as to be positioned near the lower mirror 66. The upper reactor core supporting plate 69 and the lower reactor core supporting plate 70 are formed in a disk shape and are provided with a plurality of communication holes (not illustrated). Then, the upper reactor core supporting plate 69 is connected with an upper reactor core plate 72 which is positioned at the lower side and is provided with a plurality of communication holes (not illustrated) through a plurality of reactor core supporting rod 71.

A core barrel 73 which is formed in a cylindrical shape is disposed inside the nuclear reactor vessel body 62 with a predetermined gap with respect to the inner wall surface, where the upper portion of the core barrel 73 is connected to the upper reactor core plate 72 and the lower portion is connected to a lower reactor core plate 74 which is formed in a disk shape and is provided with a plurality of communication holes (not illustrated). Then, the lower reactor core plate 74 is supported by the lower reactor core supporting plate 70. Specifically, the core barrel 73 is supported while being suspended on the lower reactor core supporting plate 70 of the nuclear reactor vessel body 62.

The reactor core 75 includes the upper reactor core plate 72, the core barrel 73, and the lower reactor core plate 74, and a plurality of fuel assemblies 76 are arranged inside the reactor core 75. The fuel assembly 76 is formed by binding a plurality of fuel rods using a plurality of support grids (not illustrated) in a grid shape, where the upper nozzle is fixed to the upper end and the lower nozzle is fixed to the lower end. Further, a plurality of control rods 77 are arranged inside the reactor core 75. The upper ends of the plurality of control rods 77 are assembled so as to become a control rod cluster 78, and are insertable into the fuel assembly 76. A plurality of control rod cluster guide tubes 79 are fixed to the upper reactor core supporting plate 69 so as to penetrate the upper reactor core supporting plate 69, and the lower end of each control rod cluster guide tube 79 extends to the control rod cluster 78 inside the fuel assembly 76.

The upper portion of the nuclear reactor vessel cover 63 which constitutes the nuclear reactor vessel 61 is formed in a semi-spherical shape and is provided with a magnetic jack type control rod driving mechanism 80. Then, the control rod driving mechanism is accommodated inside a housing 81 which is integrated with the nuclear reactor vessel cover 63. The upper ends of the plurality of control rod cluster guide tubes 79 extend to the control rod driving mechanism 80, and a control rod cluster driving shaft 82 which extends from the control rod driving mechanism 80 passes through the control rod cluster guide tube 79, extends to the fuel assembly 76, and may grip the control rod cluster 78.

The control rod driving mechanism 80 is installed so as to extend in the up and down direction and is connected to the control rod cluster 78. Then, the control rod driving mechanism moves the control rod cluster driving shaft 82, which has a plurality of circumferential grooves formed on the surface thereof so as to be arranged at the same pitch, upward or downward by the magnetic jack, thereby controlling the output of the nuclear reactor.

Further, the nuclear reactor vessel body 62 is provided with a plurality of instrumentation nozzles 83 which penetrate the lower mirror 66. In each instrumentation nozzle 83, an in-core instrument guide tube 84 is connected to the upper end inside the reactor and a conduit tube 85 is connected to the lower end outside the reactor. In each in-core instrument guide tube 84, the upper end is connected to the lower reactor core supporting plate 70, and upper and lower adjacent plates 86 and 87 are attached thereto so as to suppress a vibration. The thimble tube 88 is attached with a neutron flux detector (not illustrated) capable of measuring a neutron flux, and is insertable to the fuel assembly 76 so as to penetrate the lower reactor core plate 74 through the instrumentation nozzle 83 and the in-core instrument guide tube 84 from the conduit tube 85.

Accordingly, the nuclear fission inside the reactor core 75 is controlled in a manner such that the control rod cluster driving shaft 82 is moved by the control rod driving mechanism 80 so as to draw the control rod 77 from the fuel assembly 76 by a predetermined amount. The light water charged inside the nuclear reactor vessel 61 is heated by the generated thermal energy, and the high-temperature light water is discharged from the outlet nozzle 68 so as to be sent to the steam generator 13 as described above. Specifically, the nuclear fuel constituting the fuel assembly 76 causes the nuclear fission so as to emit neutron, and the light water as the moderator and the primary cooling water reduces the kinetic energy of the emitted high-speed neutron so as to obtain thermal neutron. Accordingly, the new nuclear fission may be easily generated and the cooling is performed by removing the generated heat. Meanwhile, the number of neutrons generated inside the reactor core 75 may be adjusted by inserting the control rod 77 into the fuel assembly 76, and the nuclear reactor may be emergently stopped by inserting the entire control rod 77 into the fuel assembly 76.

Further, the nuclear reactor vessel 61 is provided with an upper plenum 89 which is provided above the reactor core 75 so as to communicate with the outlet nozzle 68 and a lower plenum 90 which is provided therebelow. Then, a down cover 91 which communicates with the inlet nozzle 67 and the lower plenum 90 is formed between the nuclear reactor vessel 61 and the core barrel 73. Accordingly, the light water flows from the inlet nozzle 67 into the nuclear reactor vessel body 62, flows down through the down cover 91, reaches the lower plenum 90, rises while being guided upward by the spherical inner surface of the lower plenum 90, passes through the lower reactor core supporting plate 70 and the lower reactor core plate 74, and then flows into the reactor core 75. The light water which flows into the reactor core 75 absorbs thermal energy generated from the fuel assembly 76 constituting the reactor core 75 so as to cool the fuel assembly 76. Then, the light water becomes high temperature, passes through the upper reactor core plate 72, rises to the upper plenum 89, and is discharged through the outlet nozzle 68.

In the nuclear reactor vessel 61 with such a configuration, the instrumentation nozzle 83 is formed in a manner such that an in-core instrument tube is fitted into an attachment hole provided in the lower mirror 66 of the nuclear reactor vessel body 62 and the upper end of the in-core instrument tube is fixed to the inner surface of the lower mirror 66 by groove-welding. In this case, the nuclear reactor vessel body 62 is formed by buttered welding stainless steel to the inner surface of low-alloy steel as a base material, and the in-core instrument tube which is formed of a nickel base alloy is welded to the nuclear reactor vessel body 62 by a nickel base alloy while being fitted into the attachment hole of the nuclear reactor vessel body 62. For this reason, there is a possibility that stress corrosion cracking may be generated in the in-core instrument tube due to the long-time usage, and when the stress corrosion cracking is generated, there is a need to repair the instrumentation nozzle 83. However, since the nuclear reactor vessel body 62 is formed of low-alloy steel, a heat treatment for removing the stress is needed after the welding, but the heat treatment is not easily performed since a high-radiation area is formed therein.

Therefore, the nozzle repairing method includes removing the connection portion with respect to the in-core instrument tube in the groove-welding portion, removing the in-core instrument tube from the lower mirror 66, removing the groove-welding portion and processing the plug attachment portion, and welding and fixing the plug to the plug attachment portion. At this time, the plug is fixed by removing the groove-welding portion and the in-core instrument tube. For this reason, since the operation of repairing the instrumentation nozzle 83 is easily performed, the workability may be improved and the repairing cost may be decreased. Further, since the plug is welded to the buttered welding portion which is formed of stainless steel in the inner surface of the nuclear reactor vessel body 62, the heat treatment of the nuclear reactor vessel body 62 is not needed. Accordingly, it is possible to easily perform the operation of repairing the instrumentation nozzle 83 and to improve the workability.

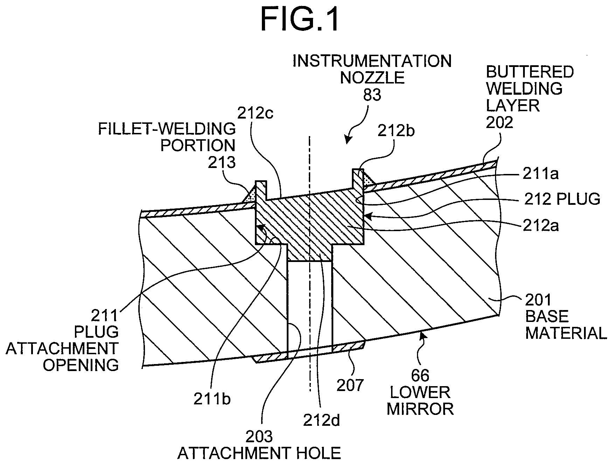

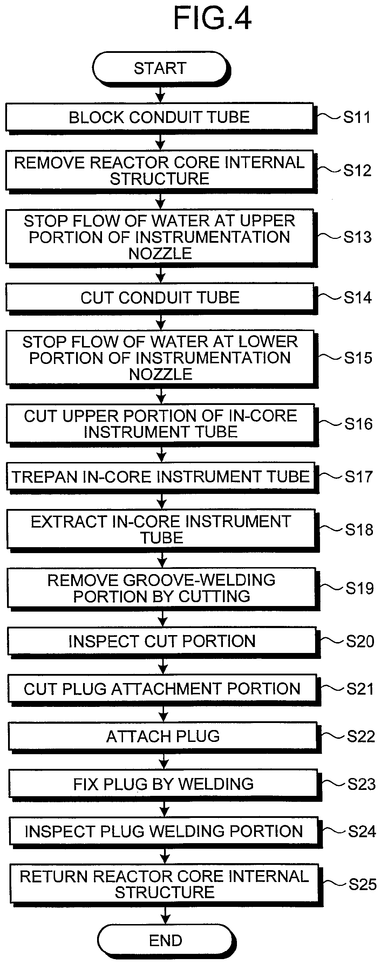

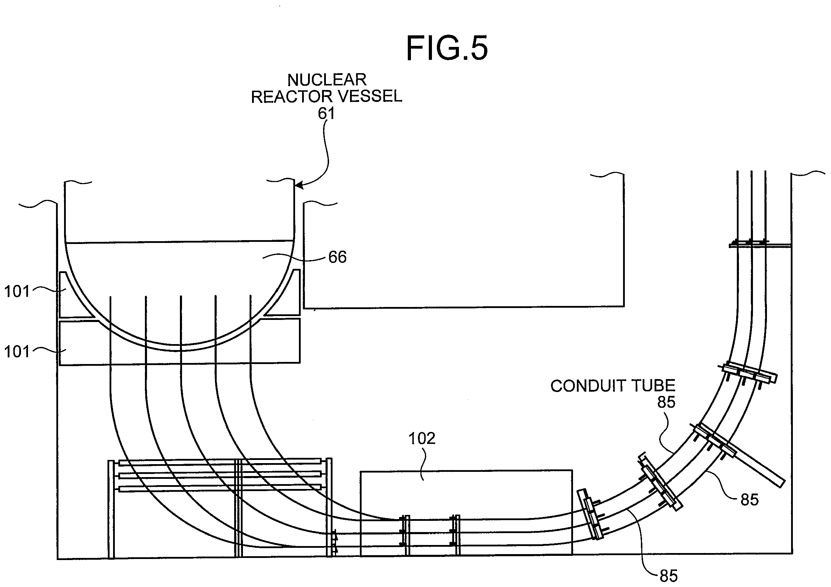

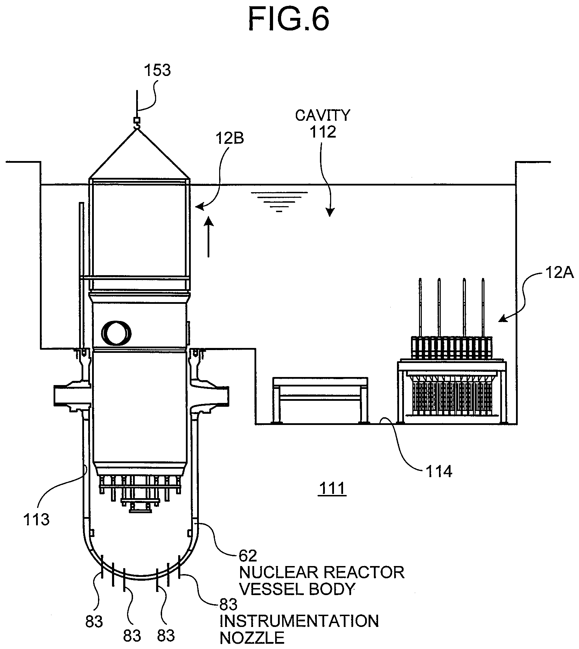

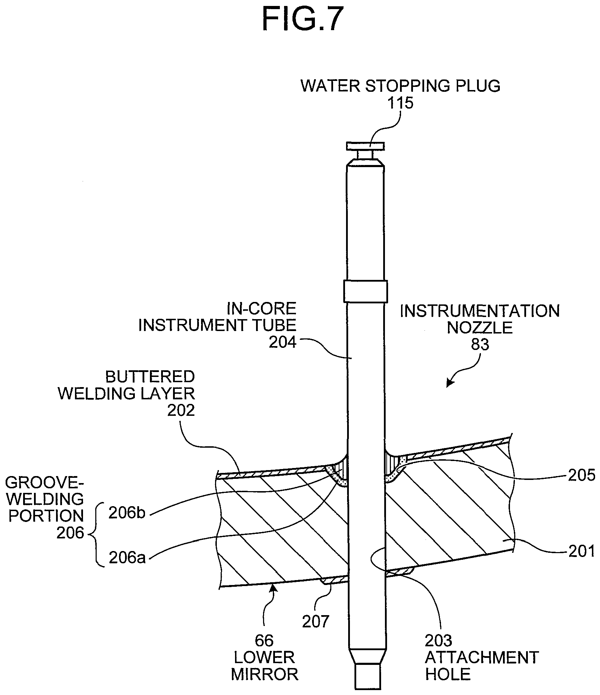

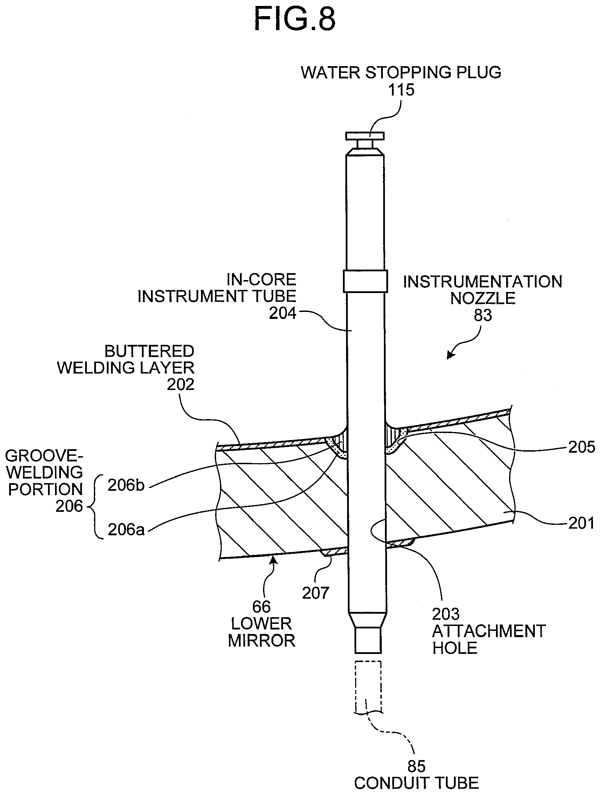

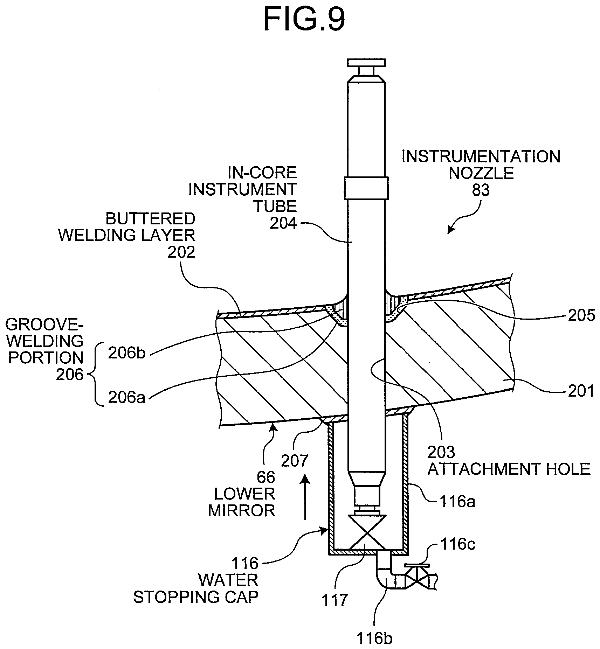

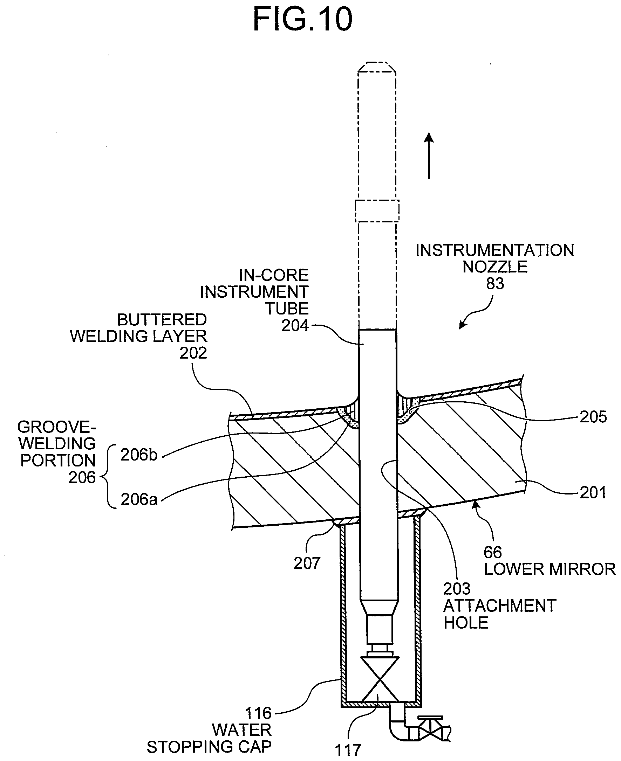

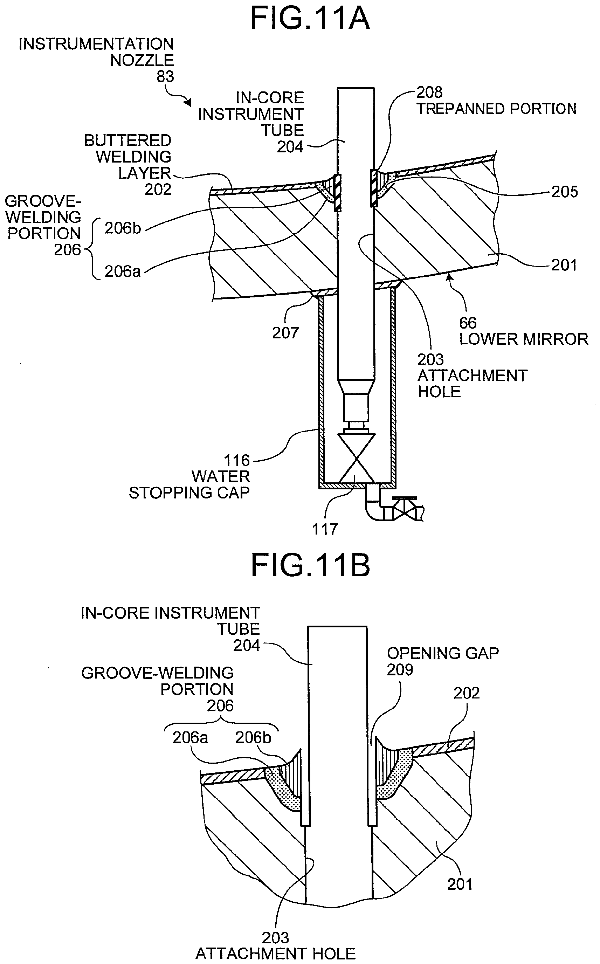

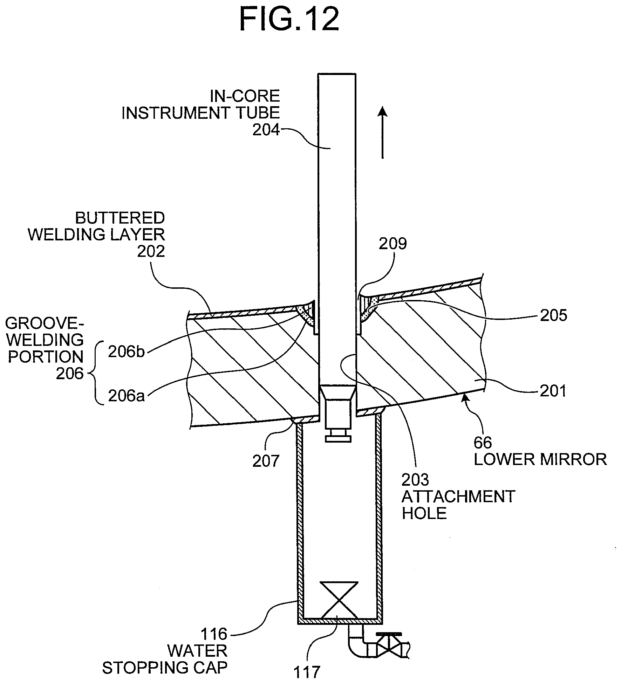

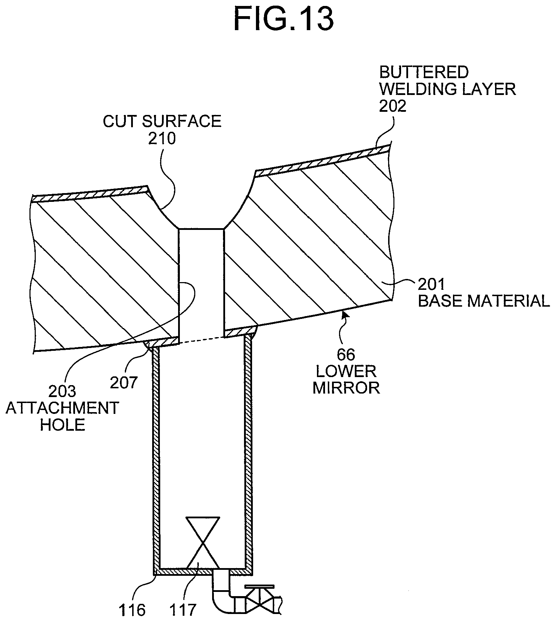

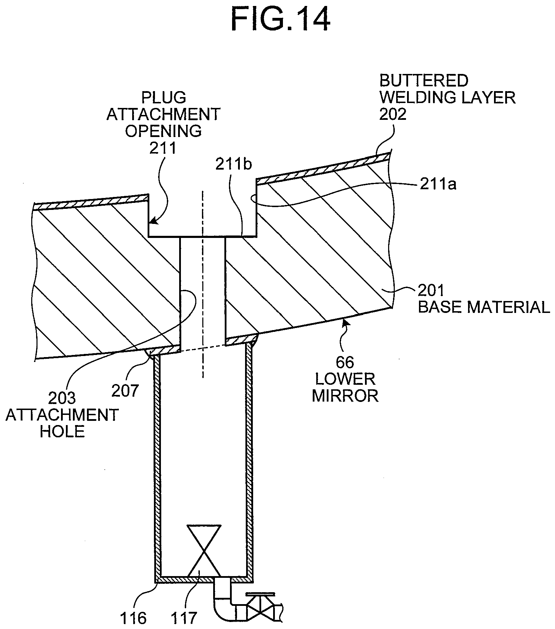

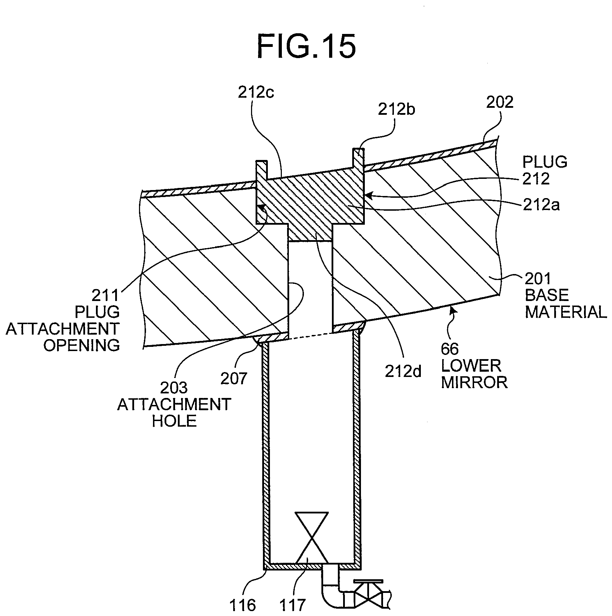

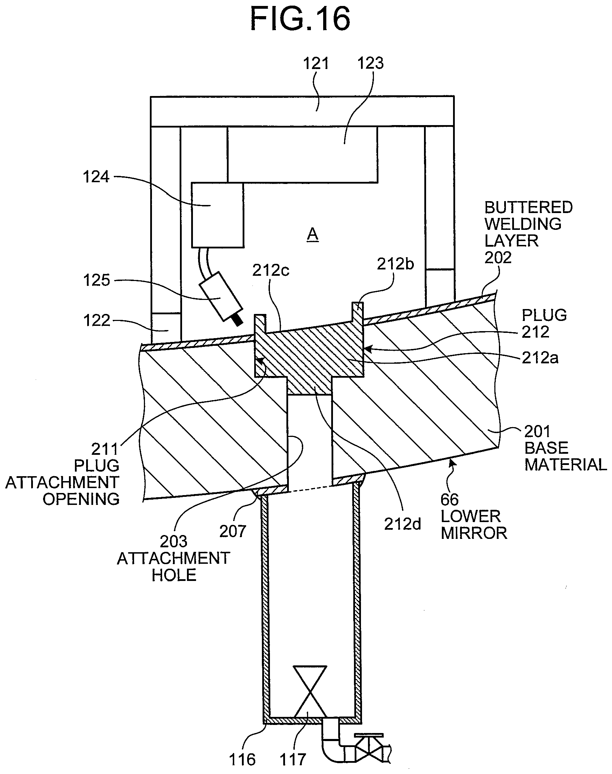

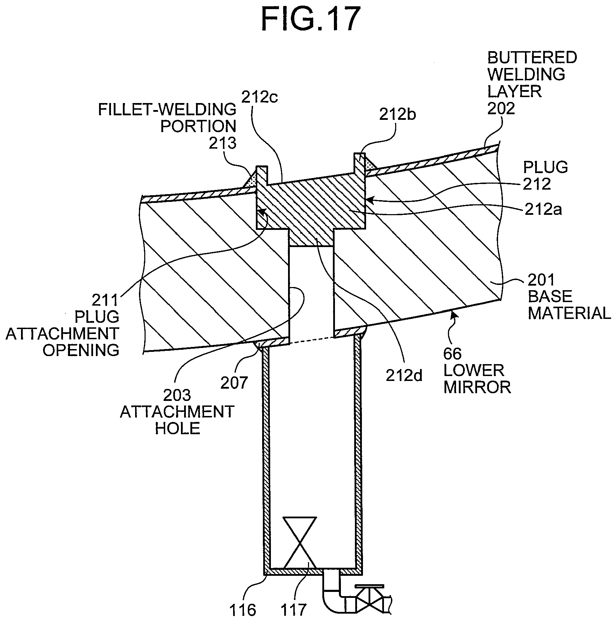

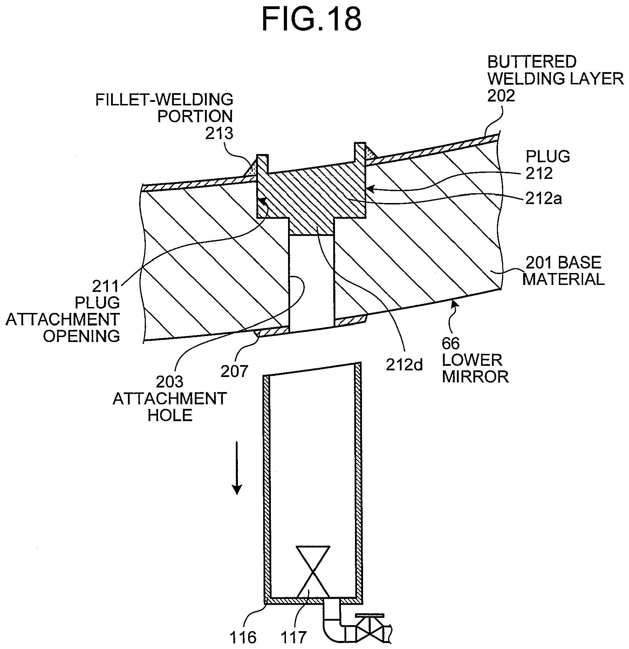

FIG. 1 is a cross-sectional view illustrating the instrumentation nozzle of the nuclear reactor vessel which is repaired by the nozzle repairing method according to the first embodiment of the invention, FIG. 4 is a flowchart illustrating the nozzle repairing method of the first embodiment, FIG. 5 is a schematic diagram illustrating an operation of drawing the thimble tube, FIG. 6 is a schematic diagram illustrating an operation of removing the reactor core internal structure from the nuclear reactor vessel, FIG. 7 is a schematic diagram illustrating an operation of stopping water inside the in-core instrument tube, FIG. 8 is a schematic diagram illustrating an operation of cutting the conduit tube, FIG. 9 is a schematic diagram illustrating an operation of attaching the water stopping cap, FIG. 10 is a schematic diagram illustrating an operation of cutting the in-core instrument tube, FIG. 11A is a schematic diagram illustrating an operation of trepanning the in-core instrument tube, FIG. 11B is a cross-sectional view illustrating the trepanned in-core instrument tube, FIG. 12 is a cross-sectional view illustrating an operation of drawing the in-core instrument tube, FIG. 13 is a schematic diagram illustrating an operation of cutting the groove-welding portion in the instrumentation nozzle, FIG. 14 is a schematic diagram illustrating an operation of cutting the plug attachment portion in the instrumentation nozzle, FIG. 15 is a schematic diagram illustrating an operation of attaching the plug to the instrumentation nozzle, FIG. 16 is a schematic diagram illustrating an operation of welding the plug to the instrumentation nozzle, FIG. 17 is a schematic diagram illustrating the instrumentation nozzle to which the plug is welded, and FIG. 18 is a schematic diagram illustrating an operation of separating the water stopping cap.

Hereinafter, the nozzle repairing method of the first embodiment will be described in detail by using the flowchart of FIG. 4 and the schematic diagrams of FIGS. 5 to 18.

As illustrated in FIGS. 4 and 5, in step S11, the lower side of the nuclear reactor vessel 61 in the pressurized water reactor 12 is blocked by a blocking member 101, the conduit tube 85 is blocked by a blocking member 102, and the thimble tube (neutron flux detector) 88 inserted into the nuclear reactor vessel 61 is extracted to the outside.

Then, as illustrated in FIGS. 4 and 6, in step S12, the nuclear reactor vessel cover 63 is separated from the nuclear reactor vessel body 62 constituting the nuclear reactor vessel 61 in the pressurized water reactor 12, and the reactor core internal structure (an upper reactor core internal structure 12A and a lower reactor core internal structure 12B) installed therein is removed. In this case, a nuclear reactor building 111 is provided with a cavity 112 which may store the cooling water therein, and an apparatus temporary placing pool 114 is provided so as to be adjacent to a nuclear reactor pool 113 by which the pressurized water reactor 12 is supported in a suspended state. For this reason, the upper reactor core internal structure 12A and the lower reactor core internal structure 12B are temporarily placed in the apparatus temporary placing pool 114 while being immersed into the cooling water.

As illustrated in FIG. 7, the nuclear reactor vessel body 62 is formed by forming a buttered welding layer 202 using stainless steel on the inner surface of the base material 201 which is formed of low-alloy steel. Then, the instrumentation nozzle 83 is formed in a manner such that an in-core instrument tube 204 formed of a nickel base alloy (for example, inconel 600/trademark) is inserted and positioned into an attachment hole 203 formed in the lower mirror 66 of the nuclear reactor vessel body 62 in the vertical direction and a groove-welding portion 206 (a lower welding portion 206a and a main welding portion 206b) which is formed of a nickel base alloy (for example, inconel 600) is provided with respect to a groove 205 which is formed at the inner surface side of the lower mirror 66.

As illustrated in FIGS. 4 and 7, in step S13, a water stopping plug handling device (not illustrated) is installed above the cavity 112 and a water stopping plug 115 moves downward inside the cooling water of the cavity 112 while being gripped by a water stopping plug attachment device (not illustrated). Then, the water stopping plug 115 is fitted to the upper end of the in-core instrument tube 204 constituting the instrumentation nozzle 83 of the nuclear reactor vessel body 62 so as to be plugged. Further, as illustrated in FIGS. 4 and 8, in step S14, the conduit tube 85 which is connected to the lower end of the in-core instrument tube 204 is cut. At this time, the cooling water inside the in-core instrument tube 204 is removed, and a foreign matter mixture preventing plug is attached to the in-core instrument tube 204 in the peripheral instrumentation nozzle 83 which is not a repair subject.

As illustrated in FIGS. 4 and 9, in step S15, a water stopping cap 116 is fixed to the lower portion of the instrumentation nozzle 83. In this case, the water stopping cap 116 includes a casing 116a of which the upper end is opened and the lower end is closed, a tube 116b which is connected to the lower portion of the casing 116a, and an opening and closing valve 116c which is provided in the tube 116b. Meanwhile, a buttered welding layer 207 which is formed of stainless steel is formed on the outer surface of the lower mirror 66 in advance, and the buttered welding layer 207 is inspected by an ultrasonic inspection device. For this reason, the upper end of the casing 116a is weld-fixed to the buttered welding layer 207 of the lower mirror 66 so that the water stopping cap 116 covers the lower portion of the in-core instrument tube 204 from the downside. In this case, it is checked whether any leakage occurs by inspecting the welding portion of the casing 116a by a visual test using a camera (not illustrated). Furthermore, the water stopping cap 116 has a jack 117 which is provided therein so as to support the in-core instrument tube 204.

When the flow of the water is stopped at the upper and lower ends of the existing in-core instrument tube 204 in the instrumentation nozzle 83, as illustrated in FIGS. 4 and 10, in step S16, the upper portion of the in-core instrument tube 204 in the instrumentation nozzle 83 is cut (or broken) by using a cutter (not illustrated), and the cut upper portion of the in-core instrument tube 204 is collected. As illustrated in FIGS. 4 and 11A, in step S17, the groove-welding portion 206 of the in-core instrument tube 204 which is fixed to the lower mirror 66 is subjected to a trepanning process (so as to become a trepanned portion 208) by using a cutting machine (not illustrated), and as illustrated in FIG. 11B, an opening gap 209 is formed between the in-core instrument tube 204 and the groove-welding portion 206. Specifically, the trepanned portion 208 as the connection portion with respect to the in-core instrument tube 204 is removed in the groove-welding portion 206. At this time, the trepanning process is performed from the upper end of the groove-welding portion 206, that is, the inner surface of the lower mirror 66 to the lower side of the groove-welding portion 206, that is, the base material 201 of the lower mirror 66. Furthermore, when performing a trepanning process on the groove-welding portion 206 of the in-core instrument tube 204 by using the cutting machine, produced chips are collected by a suctioning device (not illustrated).

As illustrated in FIGS. 4 and 12, in step S18, the in-core instrument tube 204 is extracted upward from the attachment hole 203 of the lower mirror 66 using an extracting device (not illustrated), and is removed and collected. At this time, the in-core instrument tube 204 may be pushed upward by operating (extending) the jack 117 inside the water stopping cap 116. Then, as illustrated in FIGS. 4 and 13, in step S19, the groove-welding portion 206 which is provided in the inner surface of the lower mirror 66 is removed by using a cutting machine (or an electro discharge processing machine) not illustrated in the drawings. In step S20, the groove-welding portion 206 is removed by cutting, and a remaining portion or a defect (cracking) of the groove-welding portion 206 in a cut surface 210 is inspected by using an eddy current inspection device.

Here, when the entire groove-welding portion 206 is removed and the defect (cracking) is not detected, as illustrated in FIGS. 4 and 14, in step S21, a plug attachment opening (plug attachment portion) 211 is processed in the inner surface of the lower mirror 66 by using a cutting machine (or an electro discharge processing machine) not illustrated in the drawings. At this time, the plug attachment opening 211 is an opening which is formed in the inner surface of the lower mirror 66 so as to have a cylindrical shape, and it is desirable that the axis of the plug attachment opening 211 be aligned to the axis of the attachment hole 203. Accordingly, in the plug attachment opening 211, an inner peripheral surface 211a becomes a surface taken along the vertical direction, and a bottom surface (support surface) 211b becomes a surface taken along the horizontal direction.

Furthermore, when the inner surface (buttered welding layer 202) of the lower mirror 66 or the inner surface of the plug attachment opening 211 is not sufficiently processed, a finishing process is performed by using a polisher (not illustrated), so that the inner peripheral surface 211a and the bottom surface 211b become flat surfaces. Further, the depth or the width (the inner diameter) of the plug attachment opening 211 is measured by a visual test using a camera (not illustrated), and it is checked whether the measured depth or width is a predetermined depth or width.

Then, as illustrated in FIGS. 4 and 15, in step S22, a plug 212 is attached to the plug attachment opening 211 by fitting. The plug 212 includes a cylindrical plug body 212a which has an outer diameter to be fittable to the plug attachment opening 211, a longitudinal wall portion 212b which is formed along the upward outer peripheral portion as the protrusion portion protruding upward from the upper surface portion of the plug body 212a, a concave portion 212c which is provided inside the longitudinal wall portion 212b, and a protrusion portion 212d which protrudes downward from the lower surface portion of the plug body 212a. When the plug 212 is fitted to the plug attachment opening 211, the plug attachment opening 211 is filled with the plug body 212a, the protrusion portion 212d is fitted into the attachment hole 203, the annular longitudinal wall portion 212b protrudes upward from the inner surface of the lower mirror 66, and the concave portion 212c is formed in a shape which is flush with the inner surface of the lower mirror 66. Furthermore, when the plug 212 is fitted to the plug attachment opening 211, the mating surface between the plug 212 and the plug attachment opening 211 is inspected by a visual test using a camera (not illustrated).

As illustrated in FIGS. 4 and 16, in step S23, the plug 212 which is fitted to the plug attachment opening 211 is fixed to the inner surface of the lower mirror 66 by welding, so that the attachment hole 203, that is, the instrumentation nozzle 83 is blocked. At this time, an air space is formed around the plug attachment opening 211 through which the upper portion of the instrumentation nozzle 83, that is, the upper portion of the attachment hole 203 passes, and the operation of welding the plug 212 is performed in the air space.

Specifically, a housing 121 of which the lower side is opened is disposed above the plug attachment opening 211 in the lower mirror 66, the inner space is sealed by a seal member 122, and the cooling water existing therein is discharged through a tube (not illustrated), thereby forming the inside as the air space A. Then, a welding device 123 is carried into the housing 121 through an installation tube (not illustrated), and a welding head 125 is moved by a movement device 124, so that the outer peripheral surface of the longitudinal wall portion 212b of the plug 212 is fillet-welded to the inner surface of the lower mirror 66, that is, the surface of the buttered welding layer 202. Then, as illustrated in FIG. 17, in a state where the plug 212 is fitted to the plug attachment opening 211, a fillet-welding portion 213 is formed in the corner portion of the outer peripheral surface of the longitudinal wall portion 212b and the surface of the buttered welding layer 202 of the lower mirror 66, thereby fixing the plug 212 to the lower mirror 66.

In this case, it is desirable that the plug 212 attached to the plug attachment opening 211 and the welding material (fillet-welding portion 213) used when fixing the plug 212 to the inner surface of the lower mirror 66 be formed of a nickel base alloy (for example, inconel 690) as a welding material having stress corrosion resistance higher than that of nickel base alloy (for example, inconel 600) as a welding material of the groove-welding portion 206 or the existing in-core instrument tube 204. However, the plug 212 and the welding material (fillet-welding portion 213) may be formed of the same material as that of the existing in-core instrument tube 204 and the existing groove-welding portion 206. For example, both may be formed of stainless steel.

Subsequently, as illustrated in FIGS. 4 and 18, in step S24, the fillet-welding portion 213 is inspected by a visual test using a camera (not illustrated). Here, when the sealing performance is ensured without any leakage in the fillet-welding portion 213, the housing 121 or the welding device 123 is removed, and as illustrated in FIG. 18, the water stopping cap 116 is removed. Further, the foreign matter mixture preventing plug which is attached to the in-core instrument tube 204 in the peripheral instrumentation nozzle 83 which is not a repair subject is separated.

Furthermore, here, the air space A is formed around the plug attachment opening 211, and the operation of welding the plug 212 is performed in the air space A. However, for example, the flow of the water may be stopped by the seal plate at the upper end of the nuclear reactor vessel body 62, and the entire water therein may be discharged so as to form the air space.

Then, as illustrated in FIGS. 4 and 5, in step S25, the reactor core internal structure (the upper reactor core internal structure 12A and the lower reactor core internal structure 12B) is returned into the nuclear reactor vessel body 62, the nuclear reactor vessel cover 63 is attached, and the thimble tube (neutron flux detector) 88 which is drawn to the outside is inserted into the nuclear reactor vessel 61 so as to be restored. In the pressurized water reactor 12, the blocking member 101 below the nuclear reactor vessel 61 and the blocking member 102 of the conduit tube 85 are removed.

In the repaired instrumentation nozzle 83, as illustrated in FIG. 1, with regard to the attachment hole 203 of the nuclear reactor vessel body 62 in which the buttered welding layer 202 formed of stainless steel is provided in the inner surface of the base material 201 formed of low-alloy steel, the plug attachment opening 211 is formed in the inner surface of the lower mirror 66 at the upper end of the attachment hole 203, the plug 212 is fitted to the plug attachment opening 211, and the outer peripheral surface of the longitudinal wall portion 212b in the plug 212 and the buttered welding layer 202 in the lower mirror 66 are fixed and blocked by the fillet-welding portion 213.

In this way, the nozzle repairing method of the first embodiment includes removing the connection portion (trepanned portion 208) with respect to the in-core instrument tube 204 in the groove-welding portion 206, removing the in-core instrument tube 204 from the lower mirror 66, removing the groove-welding portion 206 and processing the plug attachment opening 211, and fixing the plug 212 to the plug attachment opening 211 by welding.

Accordingly, the trepanned portion 208 with respect to the in-core instrument tube 204 in the groove-welding portion 206 is removed, the in-core instrument tube 204 is removed from the lower mirror 66, the groove-welding portion 206 is removed, the plug attachment opening 211 is processed, and the plug 212 is fixed to the plug attachment opening 211 by welding. Specifically, the in-core instrument tube 204 is removed from the instrumentation nozzle 83, the entire groove-welding portion 206 is removed, and the plug 212 is fixed to the nozzle, so that the instrumentation nozzle 83 is blocked so as not to be used. In the nuclear reactor vessel 61, since the lower mirror 66 is provided with the plurality of instrumentation nozzles 83, even when a small number of instrumentation nozzles 83 may not be used, the other instrumentation nozzles 83 may be used. Accordingly, since the repairing operation may be easily performed compared to the operation of repairing the instrumentation nozzles 83, it is possible to improve the workability and to decrease the repairing cost.

In the nozzle repairing method of the first embodiment, with regard to the lower mirror 66, the inner surface of the base material 201 is provided with the buttered welding layer 202 having stress corrosion resistance, and the outer peripheral portion of the plug 212 is fixed to the buttered welding layer 202 by welding while being fitted into the plug attachment opening 211. Accordingly, the welding for fixing the plug 212 practically does not have any influence on the base material 201 of the nuclear reactor vessel body 62 due to heat, and the repairing operation may be easily performed since the heat treatment is not needed, thereby improving the workability.

In the nozzle repairing method of the first embodiment, the longitudinal wall portion 212b is provided at the upper portion of the plug 212 and the outer peripheral surface of the longitudinal wall portion 212b is fixed to the buttered welding layer 202 by welding while the plug 212 is fitted to the plug attachment opening 211. Accordingly, the welding cost may be decreased due to a decrease in the amount of the welding material and the welding operation may be easily performed.

In the nozzle repairing method of the first embodiment, a concave portion 212c is provided at the inside of the longitudinal wall portion 212b of the plug 212. Accordingly, the plug 212 may be decreased in weight and cost, and the welding heat is emitted through the concave portion 212c, thereby improving the welding quality.

In the nozzle repairing method of the first embodiment, the groove-welding portion 206 is removed by cutting, and it is checked whether there is any defect in the cut surface 210. Then, the plug attachment opening 211 is processed. Accordingly, since it is checked that there is no defect in the cut surface 210 in which the groove-welding portion 206 is cut, it is checked that the portion of causing the stress corrosion cracking is reliably removed, and hence the high-quality nuclear reactor vessel body 62 may be maintained.

In the nozzle repairing method of the first embodiment, the plug attachment opening 211 is an opening larger than the attachment hole 203, and is provided with a bottom surface 211b which supports the plug 212. Accordingly, when the plug 212 is attached and fixed to the plug attachment opening 211, the weight of the plug 212 is supported by the bottom surface 211b of the plug attachment opening 211, and hence the welding portion for fixing the plug 212 to the lower mirror 66 may be simplified.

In the nozzle repairing method of the first embodiment, the lower side of the nuclear reactor vessel 61 is blocked by the blocking member 101, and the conduit tube 85 is blocked by the blocking member 102. Then, the thimble tube 88 inserted into the nuclear reactor vessel 61 is drawn to the outside, the reactor core internal structure is removed from the nuclear reactor vessel body 62, the groove-welding portion 206 and the in-core instrument tube 204 are removed from the water, and the processing of the plug attachment opening 211 and the welding of the plug 212 are performed in the atmosphere. Accordingly, the safety in the operation may be improved by reducing the exposure.

Further, in the nuclear reactor vessel of the first embodiment, the plurality of instrumentation nozzles 83 are set in the lower mirror 66 of the nuclear reactor vessel body 62, and any nozzle attachment hole 203 in the plurality of instrumentation nozzles 83 is plugged by the plug 212 which is formed of nickel base alloy having high stress corrosion resistance.

Accordingly, the unnecessary instrumentation nozzle 83 which is provided in the lower mirror 66 of the nuclear reactor vessel body 62 is plugged by the plug 212, and the repaired nuclear reactor vessel 61 may ensure high stress corrosion resistance. Accordingly, the repairing cost may be decreased and the stress corrosion resistance may be improved.

### [Second embodiment]

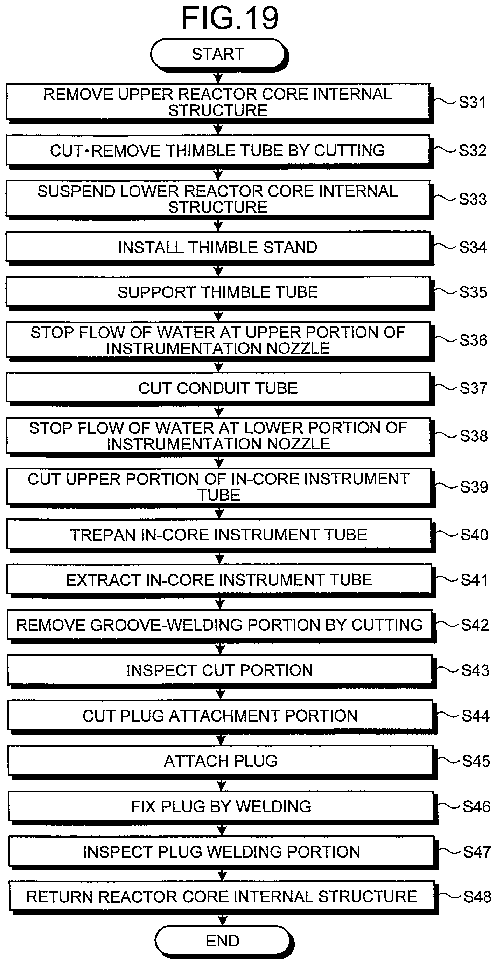

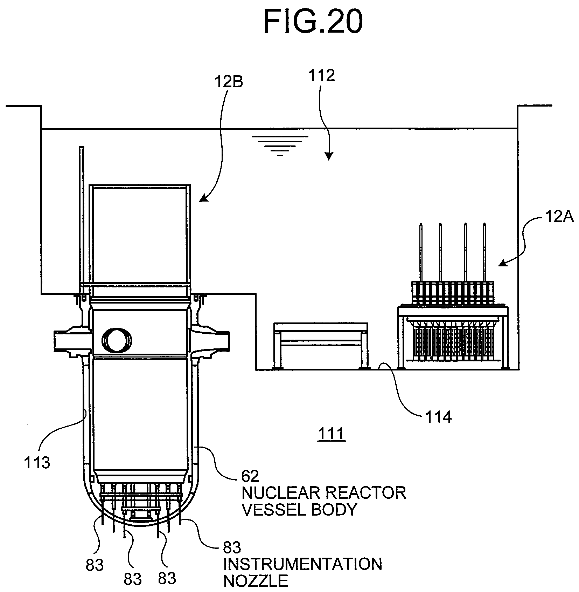

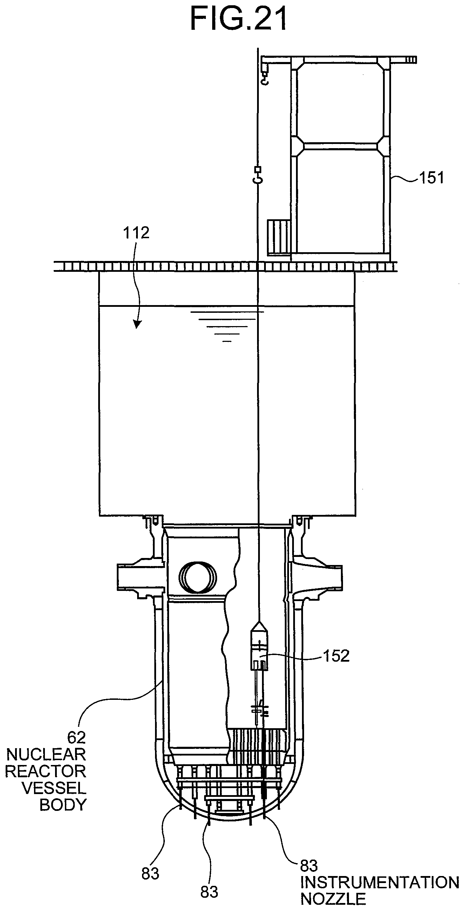

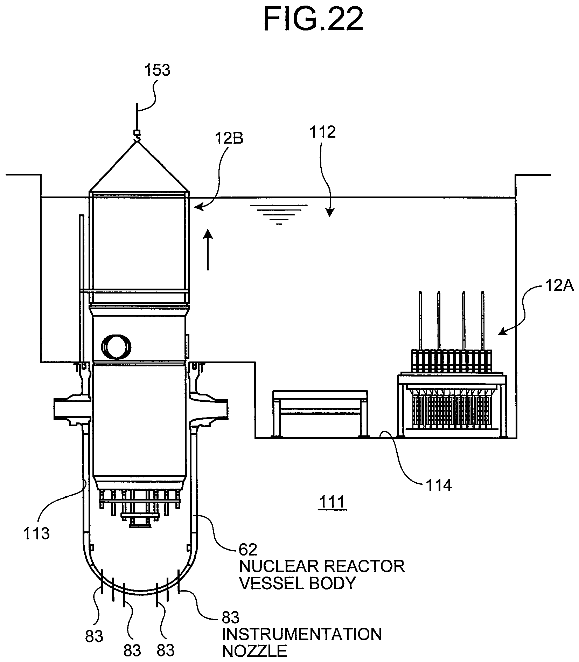

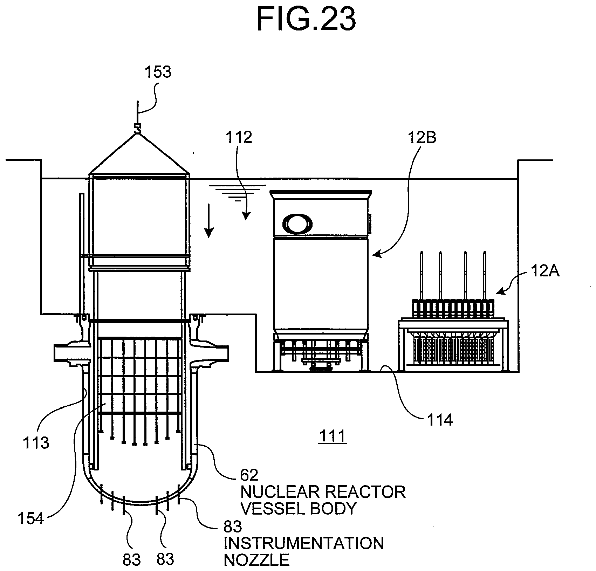

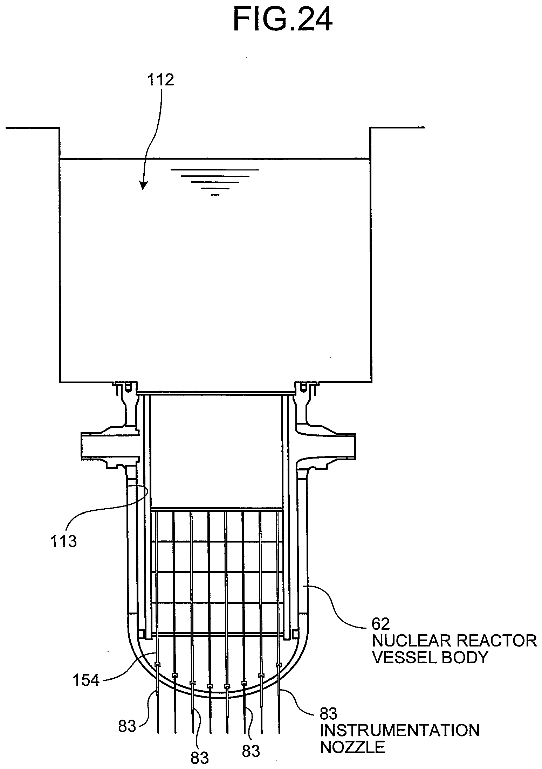

FIG. 19 is a flowchart illustrating a nozzle repairing method according to a second embodiment of the invention, FIG. 20 is a schematic diagram illustrating an operation of removing the upper reactor core internal structure from the nuclear reactor vessel, FIG. 21 is a schematic diagram illustrating a thimble tube cutting operation, FIG. 22 is a schematic diagram illustrating an operation of suspending the lower reactor core internal structure from the nuclear reactor vessel, FIG. 23 is a schematic diagram illustrating an operation of installing the thimble stand in the nuclear reactor vessel, and FIG. 24 is a schematic diagram illustrating a thimble tube supporting operation.

As in the first embodiment, the nozzle repairing method of the second embodiment includes removing the connection portion with respect to the in-core instrument tube in the groove-welding portion, removing the in-core instrument tube from the lower mirror 66, removing the groove-welding portion and processing the plug attachment portion, and fixing the plug to the plug attachment portion by welding.

Hereinafter, the nozzle repairing method of the second embodiment will be described in detail by using the flowchart of FIG. 19 and the schematic diagrams of FIG. 20 to FIG. 24.

As illustrated in FIGS. 19 and 20, in step S31, the nuclear reactor vessel cover 63 is separated from the nuclear reactor vessel body 62 constituting the nuclear reactor vessel 61 in the pressurized water reactor 12, and the upper reactor core internal structure 12A is removed from the reactor core internal structure which is accommodated therein. In this case, the upper reactor core internal structure 12A is temporarily disposed while being immersed into the cooling water in the apparatus temporary placing pool 114. Meanwhile, the lower reactor core internal structure 12B is left inside the nuclear reactor vessel body 62, and the fuel assembly 76 or the in-core instrument guide tube 84 is removed.

As illustrated in FIGS. 19 and 21, in step S32, a mount 151 is installed above the cavity 112, a cutter 152 is moved downward into the cooling water of the cavity 112, the front ends of the thimble tubes 88 are removed in the repaired instrumentation nozzle 83 and the peripheral instrumentation nozzle 83, and the removed front ends of the thimble tubes 88 are accommodated inside an accommodating vessel (not illustrated). Then, in the instrumentation nozzle 83 in which the thimble tube 88 is cut, and the water stopping plug 115 is fitted to the upper end of the in-core instrument tube 204 so as to be plugged. The operation of plugging the in-core instrument tube 204 is the same as the operation in step S13 in the above-described first embodiment.

As illustrated in FIGS. 19 and 22, in step S33, the lower reactor core internal structure 12B is removed while being suspended by a polar crane 153. In this case, the lower reactor core internal structure 12B is temporarily disposed while being immersed into the cooling water in the apparatus temporary placing pool 114. As illustrated in FIGS. 19 and 23, in step S34, a thimble stand 154 is moved downward inside the cooling water in the cavity 112 by using the polar crane 153. Then, as illustrated in FIGS. 19 and 23, in step S35, each thimble tube 88 is supported inside the thimble stand 154 in the instrumentation nozzles 83 other than the repaired instrumentation nozzles 83 and the peripheral instrumentation nozzles 83.

Subsequently, as illustrated in FIG. 19, in step S36, it is checked whether the flow of the water is stopped at the upper portions of the repairing instrumentation nozzles 83 and the peripheral instrumentation nozzles 83. Furthermore, since the process from step S37 to step S47 in the second embodiment is substantially the same as the process from step S14 to step S24 in the above-described first embodiment, the description thereof will not be repeated.

Then, in step S48, the thimble stand 154 is removed from the inside of the nuclear reactor vessel body 62, the reactor core internal structure (the upper reactor core internal structure 12A and the lower reactor core internal structure 12B) is returned into the nuclear reactor vessel body 62, the nuclear reactor vessel cover 63 is attached, and the thimble tube (neutron flux detector) 88 which is drawn to the outside is inserted into the nuclear reactor vessel 61 so as to be restored.

In this way, in the nozzle repairing method of the second embodiment, the reactor core internal structure is removed from the nuclear reactor vessel body 62, the thimble stand 154 is disposed inside the nuclear reactor vessel 61, the thimble tube 88 of the unrepaired instrumentation nozzle 83 is supported, the groove-welding portion 206 and the in-core instrument tube 204 are removed from the water, and the processing of the plug attachment opening 211 and the welding of the plug 212 are performed in the atmosphere. Accordingly, there is no need to block the nuclear reactor vessel 61 or the conduit tube 85 when drawing the thimble tube 88 inserted into the nuclear reactor vessel 61 to the outside, and it is possible to improve the safety in the operation by reducing the exposure.

Furthermore, in the above-described embodiments, the cutting process is performed so that the axis of the plug attachment opening 211 is aligned to the axis of the attachment hole 203, but the processing process may be performed so that the axis of the plug attachment opening 211 is aligned to the radial direction of the lower mirror 66. Further, the plug attachment opening 211 is formed in a cylindrical shape, but the shape is not limited thereto. That is, the plug attachment opening may be formed in a rectangular cylindrical shape, a semi-spherical shape, a conical shape, or the like.

Further, in the above-described embodiments, the upper surface portion of the plug body 212a is provided with the longitudinal wall portion 212b which is formed as the protrusion portion protruding upward and has the concave portion 212c therein, but the concave portion 212c may not be provided.

Furthermore, in the above-described embodiment, the method of repairing the instrumentation nozzle 83 provided in the lower mirror 66 of the nuclear reactor vessel body 62 has been described, but the invention may be applied to the method of repairing the instrumentation nozzle provided in the upper mirror of the nuclear reactor vessel cover 63. Further, the nozzle repairing method of the invention is applied to the pressurized water reactor, but may be also applied to the water boiling type nuclear reactor vessel.

According to the embodiments, the connection portion with respect to the in-core instrument tube in the groove-welding portion is removed, the in-core instrument tube is removed in the semi-spherical portion, the groove-welding portion is removed, the plug attachment portion is processed, and the plug is fixed to the plug attachment portion by welding. Specifically, the in-core instrument tube is removed from the instrumentation nozzle, the entire groove-welding portion is removed, and the plug is fixed to the nozzle, so that the instrumentation nozzle may not be used. Since the nuclear reactor vessel is provided with the plurality of instrumentation nozzles, even when a small number of instrumentation nozzles may not be used, the other instrumentation nozzles may be used. Accordingly, since the repairing operation may be easily performed compared to the operation of repairing the instrumentation nozzles, it is possible to improve the workability and to decrease the repairing cost.

According to the embodiments, since the outer peripheral portion of the plug is welded to the buttered welding layer while the plug is fitted into the plug attachment portion, the welding practically does not have any influence on the nuclear reactor vessel due to heat, and the repairing operation may be easily performed since the heat treatment is not needed, thereby improving the workability.

According to the embodiments, since the outer surface of the protrusion portion is fixed to the semi-spherical portion by welding while the plug is fitted into the plug attachment portion, the welding material may be decreased in amount. Accordingly, the welding cost may be decreased and the welding operation may be easily performed.

According to the embodiments, since the upper outer peripheral portion of the plug is provided with the longitudinal wall portion and the concave portion is provided inside the plug, the plug may be decreased in weight, and hence the repairing cost may be decreased. Also, the heat of welding is emitted through the concave portion, and hence the welding quality may be improved.

According to the embodiments, since it is checked whether there is any defect on the surface from which the groove-welding portion is removed by cutting, the high-quality nuclear reactor vessel may be maintained.

According to the embodiments, when the plug is attached to the plug attachment portion so as to be fixed to the semi-spherical portion, the weight of the plug is supported by the support surface of the plug attachment portion, and hence the welding portion for fixing the plug to the semi-spherical portion may be simplified.

According to the embodiments, the lower portion of the nuclear reactor vessel body is provided with the plurality of instrumentation nozzles, and the unnecessary instrumentation nozzles are plugged by the plug. Thus, the repaired nuclear reactor vessel may ensure high stress corrosion resistance, so that the repairing cost may be decreased and the stress corrosion resistance may be improved.

According to the embodiments of the invention, the connection portion with respect to the in-core instrument tube in the groove-welding portion is removed, the in-core instrument tube is removed in the semi-spherical portion, the groove-welding portion is removed, the plug attachment portion is processed, and the plug is fixed to the plug attachment portion by welding. Accordingly, since the repairing operation may be easily performed compared to the operation of repairing the instrumentation nozzle, the workability may be improved and the repairing cost may be decreased. Further, according to the nuclear reactor vessel, the lower portion of the nuclear reactor vessel body is provided with the plurality of instrumentation nozzles and the unnecessary instrumentation nozzles are plugged by the plug. Thus, the repaired nuclear reactor vessel may ensure high stress corrosion resistance, so that the repairing cost may be decreased and the stress corrosion resistance may be improved.

## Claims

1. A nozzle repairing method of repairing an instrumentation nozzle (83) in which an in-core instrument tube (204) is inserted into an attachment hole (203) formed in a semi-spherical portion (66) of a nuclear reactor vessel (61) and an inner surface side of the semi-spherical portion (66), which is an area around the attachment hole (203), is groove-welded so as to fix the in-core instrument tube (204),
the nozzle repairing method comprising:
removing (S17, S40) a connection portion (208) connected to the in-core instrument tube (204), the connection portion (208) being a part of a groove-welding portion (206) of the area around the attachment hole (203);
removing (S18, S41) the in-core instrument tube (204) which is inserted in the attachment hole (203), of which the connection portion (208) is removed, from the semi-spherical portion (66);
removing (S19, S42) a part of the groove-welding portion (206), which is an area except the connection portion (208), and processing (S21, S44) a plug attachment portion (211) which has a support surface (211b) configured to support a bottom surface of a plug (212);
fixing (S22, S45) the plug (212) by inserting the plug in the plug attachment portion (211) so that the plug (212) fills the plug attachment portion (211), and supporting the plug (212) by the support surface (211b);
sealing the plug attachment portion (211) and the attachment hole (203) by welding (S23, S46) an outer surface of the plug (212) and an inner surface of the semi-spherical portion (66).

2. The nozzle repairing method according to claim 1,
wherein the inner surface of the semi-spherical portion (66) is provided with a buttered welding layer (202) having stress corrosion resistance and the outer peripheral portion of the plug (212) is fixed to the buttered welding layer (202) by welding while the plug (212) is fitted to the plug attachment portion (211).

3. The nozzle repairing method according to claim 1 or 2,
wherein the plug (212) is provided with an upward protrusion portion, and the outer surface of the protrusion portion is fixed to the semi-spherical portion (66) by welding while the protrusion portion is fitted to the plug attachment portion (211).

4. The nozzle repairing method according to claim 3,
wherein the protrusion portion has a longitudinal wall portion (212b) formed along the upward outer peripheral portion of the plug (212), and a concave portion (212c) is provided inside the longitudinal wall portion (212b).

5. The nozzle repairing method according to any one of claims 1 to 4,
wherein after the groove-welding portion (206) is removed by cutting (S19, S42), it is checked whether any defect is found in the cut surface and the plug attachment portion (211) is processed (S20, S43).

6. The nozzle repairing method according to any one of claims 1 to 5,
wherein the plug attachment portion (211) is an opening larger than the attachment hole (203), and has a support surface for supporting the plug (212).

## Patentansprüche

1. Düsenreparaturverfahren zum Reparieren einer Instrumentierungsdüse (83), in der ein Innenkern-Instrumentenrohr (204) in ein Befestigungsloch (203) eingesetzt ist, das in einem halbkugelförmigen Abschnitt (66) eines Kernreaktorgefäßes (61) gebildet ist, und eine Innenfläche des halbkugelförmigen Abschnitts (66), der ein Bereich um das Befestigungsloch (203) ist, mit Fugenschweißnähten versehen ist, um das Innenkern-Instrumentenrohr (204) zu fixieren,
wobei das Düsenreparaturverfahren umfasst:
Entfernen (S17, S40) eines Verbindungsabschnitts (208), der mit dem Innenkern-Instrumentenrohr (204) verbunden ist, wobei der Verbindungsabschnitt (208) Teil eines Fugenschweißabschnitts (206) des Bereichs um das Befestigungsloch (203) ist,
Entfernen (S18, S41) des Innenkern-Instrumentenrohrs (204), das in das Befestigungsloch (203) eingesetzt ist, dessen Verbindungsabschnitts (208) entfernt ist, aus dem halbkugelförmigen Abschnitt (66),
Entfernen (S19, S42) eines Teils des Fugenschweißabschnitts (206), der ein Bereich mit Ausnahme des Verbindungsabschnitts (208) ist, und Bearbeiten (S21, S44) eines Stopfenbefestigungsabschnitts (211), der eine Auflagefläche (211b) aufweist, die zum Stützen einer Bodenfläche eines Stopfens (212) gestaltet ist,
Fixieren (S22, S45) des Stopfens (212) durch Einsetzen des Stopfens in den Stopfenbefestigungsabschnitt (211), so dass der Stopfen (212) den Stopfenbefestigungsabschnitt (211) füllt, und Stützen des Stopfens (212) durch die Auflagefläche (211b),
Abdichten des Stopfenbefestigungsabschnitts (211) und des Befestigungslochs (203) durch Verschweißen (S23, S46) einer Außenfläche des Stopfens (212) und einer Innenfläche des halbkugelförmigen Abschnitts (66).

2. Düsenreparaturverfahren nach Anspruch 1,
wobei die Innenfläche des halbkugelförmigen Abschnitts (66) mit einer aufgepufferten Schweißschicht (202) mit Spannungskorrosionsbeständigkeit bereitgestellt ist und der äußere Umfangsabschnitt des Stopfens (212) an der aufgepufferten Schweißschicht (202) durch Schweißen fixiert wird, während der Stopfen (212) am Stopfenbefestigungsabschnitt (211) angebracht wird.

3. Düsenreparaturverfahren nach Anspruch 1 oder 2,
wobei der Stopfen (212) mit einem aufwärtigen Vorsprungsabschnitt bereitgestellt ist und die Außenfläche des Vorsprungsabschnitts am halbkugelförmigen Abschnitt (66) durch Schweißen fixiert wird, während der Vorsprungsabschnitt am Stopfenbefestigungsabschnitt (211) angebracht wird.

4. Düsenreparaturverfahren nach Anspruch 3,
wobei der Vorsprungsabschnitt einen länglichen Wandabschnitt (212b) aufweist, der entlang des äußeren Umfangsabschnitts des Stopfens (212) gebildet ist, und ein konkaver Abschnitt (212c) im Inneren des länglichen Wandabschnitts (212b) bereitgestellt ist.

5. Düsenreparaturverfahren nach einem der Ansprüche 1 bis 4,
wobei, nachdem der Fugenschweißabschnitt (206) durch Schneiden (S19, S42) entfernt ist, geprüft wird, ob ein Defekt in der Schnittfläche gefunden wird, und der Stopfenbefestigungsabschnitt (211) bearbeitet wird (S20, S43).

6. Düsenreparaturverfahren nach einem der Ansprüche 1 bis 5
wobei der Stopfenbefestigungsabschnitt (211) eine Öffnung ist, die größer als das Befestigungsloch (203) ist, und eine Auflagefläche zum Stützen des Stopfens (212) aufweist.

## Revendications

1. Procédé de réparation de buse pour réparer une buse d'instrumentation (83) dans laquelle un tube d'instrument de coeur (204) est inséré dans un trou de fixation (203) formé dans une partie semi-sphérique (66) d'une cuve de réacteur nucléaire (61) et un côté de surface intérieure de la partie semi-sphérique (66), qui est une zone autour du trou de fixation (203), est soudé avec rainure de façon à fixer le tube d'instrument de coeur (204),
le procédé de réparation de buse comportant le fait de :
retirer (S17, S40) une partie de connexion (208) reliée au tube d'instrument de coeur (204), la partie de connexion (208) étant une partie d'une partie de soudage avec rainure (206) de la zone autour du trou de fixation (203) ;
retirer (S18, S41) le tube d'instrument de coeur (204) qui est inséré dans le trou de fixation (203), dont la partie de connexion (208) est retirée, de la partie semi-sphérique (66) ;
retirer (S19, S42) une partie de la partie de soudage avec rainure (206), qui est une zone à l'exception de la partie de connexion (208), et traiter (S21, S44) une partie de fixation de bouchon (211) qui a une surface de support (211b) configurée pour supporter une surface inférieure d'un bouchon (212) ;
fixer (S22, S45) le bouchon (212) en insérant le bouchon dans la partie de fixation de bouchon (211) de telle sorte que le bouchon (212) remplit la partie de fixation de bouchon (211), et supporter le bouchon (212) grâce à la surface de support (211b) ;
obturer la partie de fixation de bouchon (211) et le trou de fixation (203) en soudant (S23, S46) une surface extérieure du bouchon (212) et une surface intérieure de la partie semi-sphérique (66).

2. Procédé de réparation de buse selon la revendication 1,
selon lequel la surface intérieure de la partie semi-sphérique (66) est pourvue d'une couche de soudure de remplissage (202) ayant une résistance à la corrosion sous contrainte et la partie périphérique extérieure du bouchon (212) est fixée sur la couche de soudure de remplissage (202) par soudage alors que le bouchon (212) est monté sur la partie de fixation de bouchon (211).

3. Procédé de réparation de buse selon la revendication 1 ou 2,
selon lequel le bouchon (212) est pourvu d'une partie de saillie vers le haut, et la surface extérieure de la partie de saillie est fixée sur la partie semi-sphérique (66) par soudage alors que la partie de saillie est montée sur la partie de fixation de bouchon (211).

4. Procédé de réparation de buse selon la revendication 3,
selon lequel la partie de saillie a une partie de paroi longitudinale (212b) formée le long de la partie périphérique extérieure vers le haut du bouchon (212), et une partie concave (212c) est prévue à l'intérieur de la partie de paroi longitudinale (212b).

5. Procédé de réparation de buse selon l'une quelconque des revendications 1 à 4,
selon lequel, une fois que la partie de soudage avec rainure (206) est retirée par découpe (S19, S42), on vérifie si un défaut quelconque est trouvé dans la surface découpée et la partie de fixation de bouchon (211) est traitée (S20, S43).

6. Procédé de réparation de buse selon l'une quelconque des revendications 1 à 5,
selon lequel la partie de fixation de bouchon (211) est une ouverture plus grande que le trou de fixation (203), et a une surface de support pour supporter le bouchon (212).
